# EUROPEAN PATENT SPECIFICATION

(11) **EP 2 630 553 B1**
(45) Date of publication and mention of the grant of the patent: **18.12.2019**
(21) Application number: 11834787.1
(22) Date of filing: 15.08.2011
(51) Int. Cl.: G06F 1/16, H05K 7/16, H05K 5/00, G06F 3/041, G06F 3/0354, H05K 5/04

(54) **PORTABLE COMPUTER WITH REVEAL REGION**
TRAGBARER RECHNER MIT ANZEIGEBEREICH
ORDINATEUR PORTABLE À RÉGION RENTRANTE

(30) Priority: 19.10.2010 US 275724 P; 18.10.2010 US 394037 P
(43) Date of publication of application: 28.08.2013
(73) Proprietor: Apple Inc., Cupertino CA 95014 (US)
(72) Inventor: DEGNER, Brett W., Cupertino California 95014 (US); GOLDBERG, Michelle, Cupertino California 95014 (US); KALINOWSKI, Caitlin, Cupertino California 95014 (US); RUNDLE, Nicholas A., Cupertino California 95014 (US); BROCK, John M., Cupertino California 95014 (US); DEFOREST, Laura M., Cupertino California 95014 (US)
(74) Representative: Gillard, Matthew Paul
(86) International application number: PCT/US2011/047804
(87) International publication number: WO 2012/054128

(56) References cited:
- EP-A1- 1 919 267
- JP-A- H1 146 070
- JP-A- 2009 059 285
- US-A1- 2008 316 691
- US-A1- 2009 179 537
- US-B1- 6 437 773
- US-B1- 6 437 773

## Description

### CROSS REFERENCE TO RELATED APPLICATIONS

This patent application claims priority to U.S. Provisional Patent Application No. 61/394,037 filed October 18, 2010 and U.S. Provisional Patent Application No. 61/275,724 filed October 19, 2010, both of which are entitled "PORTABLE COMPUTING SYSTEM," both of which are by Degner et al.,

### TECHNICAL FIELD

The present invention relates generally to portable computing devices. More particularly, the present embodiments relate to enclosures of portable computing systems and methods of assembling portable computing devices.

### BACKGROUND

The outward appearance of a portable computing system, including its design and its heft, is important to a user of the portable computing system, as the outward appearance contributes to the overall impression that the user has of the portable computing system. At the same time, the assembly of the portable computing system is also important to the user, as a durable assembly will help extend the overall life of the portable computing system and will increase its value to the user.

One design challenge associated with the manufacture of portable computing systems is the design of the outer enclosures used to house the various internal computing components. This design challenge generally arises from a number conflicting design goals that include the desirability of making the outer enclosure or housing lighter and thinner, of making the enclosure stronger, and of making the enclosure aesthetically pleasing, among other possible goals. Lighter housings or enclosures tend to be more flexible and therefore have a greater propensity to buckle and bow, while stronger and more rigid enclosures tend to be thicker and carry more weight. Unfortunately, increased weight may lead to user dissatisfaction with respect to clunkiness or reduced portability, while bowing may damage internal parts or lead to other failures. Further, few consumers desire to own or use a device that is perceived to be ugly or unsightly. Due to such considerations, portable computing system enclosure materials are typically selected to provide sufficient structural rigidity while also meeting weight constraints, with any aesthetic appeal being worked into materials that meet these initial criteria.

As such, outer enclosures or housings for portable computing systems are often made from aluminum, steel and other inexpensive yet sturdy metals having a suitable thickness to achieve both goals of low weight and high structural rigidity. The use of metal enclosures is also convenient from the standpoint of providing a ready electrical ground and/or a ready radio frequency ("RF") or electromagnetic interference ("EMI") shield for the processor and other electrical components of the computing device, since a metal enclosure or outer housing can readily be used for such functions.

Therefore, it would be beneficial to provide portable computing system that is aesthetically pleasing and lightweight, and durable. It would also be beneficial to provide methods for assembling the portable computing system.

US 6437773 discloses a notebook computer having basic body comprising a bottom shell and a top shell. A display unit is arranged in a pivotable lid housing and a keyboard is detachably mounted on the top shell. A cutout is provided in the top shell and an outwardly directed electrical contact configuration is secured on an assembly that is attached to the basic body such that the contact configuration is secured in the cutout.

JP H11 46070 discloses a case body for small-sized electronic equipment which prevents noises, such as static electricity, from entering the interior of the case body.

EP1919267 discloses a metal structure that holds a display unit, as a main structure, and a casing structure that is integrally molded from resin onto the metal structure. The metal structure is resilient against flexural loads, torsional loads, and other deformations from the exterior upon the display unit composed of thin plate glass, because the member that protects the display unit is in a box shape.

### SUMMARY

The present invention describes various embodiments that relate to systems and methods for providing a lightweight and durable portable computing device. This can be accomplished at least in part through the use of a reveal region adapted to contact a portion of the other housing component that includes a contact surface and a leading edge.

In accordance with a first aspect, a laptop computer is provided, as defined by claim 1 of the appended claims.

In various examples of the disclosure, a portable computing device includes at least a base portion having a top case and a bottom case, each being formed of a lightweight and strong material. The top case can be wedge shaped and the bottom case can be coupled to the top case to form a complete housing for a plurality of operational components and a plurality of structural components. The portable computing device can also include a lid portion pivotally connected to the base portion by a hinge assembly. The lid portion can have a display in communication with one or more of the components in the base portion, with one or more electrical conductors electrically connecting the base portion to the lid portion. In one aspect of the described embodiments, the computing device takes the form of a laptop computer.

In various examples, the wedge shaped top case can have a trough and a shoulder formed around a circumference of the top case at an interfacing edge thereof, wherein the trough includes a first wall, a bottom portion, and a second wall that forms the shoulder, with both walls rising above the bottom portion to form the trough, and wherein the shoulder includes a raised portion having a first contact surface. The bottom case can have a second contact surface formed around a circumference thereof with at least a portion of the second contact surface contacting the first contact surface. The bottom case can also have a leading edge that is spaced apart from both the first wall and bottom of the trough by gaps therebetween. The area of contact between the first and second contact surfaces can define a plane that is non-parallel to a horizontal plane generally defined by the portable computing device or bottom case. The bottom case can be coupled to the top case to form a complete housing for at least a portion of the portable computing device, and this complete housing can enclose at least a plurality of operational components and a plurality of structural components.

In accordance with a second aspect, a method of assembling a laptop computer is provided, the method defined by claim 3 of the appended claims.

In various examples of the disclosure, methods of assembling a portable computing system can include providing a base portion that includes a bottom case and a wedge shaped top case having a trough formed at an interfacing edge thereof, wherein the trough includes a raised shoulder portion having a first contact surface. Further method steps can include coupling the bottom case to the top case to form a complete housing for at least a portion of the portable computing device that encloses operational components and structural components, pivotally connecting the base portion to a lid portion having a display by a hinge assembly, and electrically connecting components in the lid portion to operational components in the base portion by one or more electrical conductors that run through the hinge assembly.

In still further examples, methods of forming an interface for a housing component of a portable computing system can involve providing a partially formed and wedge shaped top housing component and forming a trough around a circumference of the top housing component at an interfacing edge thereof. The trough can include a first wall, a bottom portion, and a second wall in the form of a shoulder, with both walls rising above the bottom portion to form the trough. Another method step can involve removing an extended portion of the shoulder to create a suitable interfacing first contact surface at the top of the shoulder. The methods can also include placing a second contact surface of a bottom housing component against the interfacing first contact surface at the top of the shoulder, and coupling the bottom housing component to the top housing component.

Other apparatuses, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The included drawings are for illustrative purposes and serve only to provide examples of possible structures and arrangements for the disclosed inventive apparatuses and methods for providing portable computing devices. These drawings in no way limit any changes in form and detail that may be made to the invention by one skilled in the art without departing from the scope of the invention. The embodiments will be readily understood by the following detailed description in conjunction with the accompanying drawings, wherein like reference numerals designate like structural elements, and in which:
Figs. 1-6 show representative views of a portable computing system in accordance with the described embodiments.
Fig. 7 shows an external view of a bottom case in accordance with the described embodiments.
Fig. 8 shows an internal view of the bottom case shown in Fig. 7.
Figs. 9a and 9b show an exterior view of top case illustrating various openings used to accommodate a keyboard and a touchpad in accordance with the described embodiments.
Figs. 10a through 10c show a top case and feature plate assembly.
Fig. 11a and 11b show an embodiment of a tamper resistant fastener that can be used to secure the top case and the bottom case of the portable computing device.
Fig. 12, an exemplary outer housing for a portion of a portable computing system is illustrated in side cross-sectional view.
Fig. 13, an exemplary alternative outer housing for a portion of a portable computing system according to one embodiment of the present invention is similarly shown in side cross-sectional view.
Fig. 14 illustrates in close-up side cross-sectional view an exemplary shoulder to trough interface region of the housing components of FIG. 13 according to one embodiment of the present invention.
Figs. 15A through 15C, on exemplary way of forming a trough in a housing component interface region are provided according to one embodiment of the described embodiments.
Fig. 16 shows a flowchart detailing a process in accordance with the described embodiments.

### DETAILED DESCRIPTION

Exemplary applications of apparatuses and methods according to the present invention are described in this section. These examples are being provided solely to add context and aid in the understanding of the invention. It will thus be apparent to one skilled in the art that the present invention may be practiced without some or all of these specific details. In other instances, well known process steps have not been described in detail in order to avoid unnecessarily obscuring the present invention. Other applications are possible, such that the following examples should not be taken as limiting.

The following relates to a portable computing system such as a laptop computer, net book computer, tablet computer, etc. The portable computing system can include a multi-part housing having a top case and a bottom case joining at a reveal to form a base portion. The portable computing system has an upper portion (or lid) that can house a display screen and other related components whereas the base portion can house various processors, drives, ports, battery, keyboard, touchpad and the like. The base portion is formed of a multipart housing that can include top and bottom outer housing components each of which can be formed in a particular manner at an interface region such that the gap and offset between these outer housing components are not only reduced, but are also more consistent from device to device during the mass production of devices. These general subjects are set forth in greater detail below.

In a particular embodiment, the lid and base portion can be pivotally connected with each other by way of what can be referred to as a hollow clutch assembly. The hollow clutch assembly can be arranged to pivotally couple the base portion to the lid. The hollow clutch assembly can include at least a hollow cylindrical portion that in turn includes an annular outer region, and a central bore region surrounded by the annular outer region, the central bore suitably arranged to provide support for electrical conductors between the base portion and electrical components in the lid. The hollow clutch assembly can also include a plurality of fastening regions that couple the hollow clutch to the base portion and the lid of the portable computing system with at least one of the fastening regions being integrally formed with the hollow cylindrical portion such that space, size and part count are minimized.

The multipart housing can be formed of a strong and durable yet lightweight material. Such materials can include composite materials and or metals such as aluminum. Aluminum has a number of characteristics that make it a good choice for the multipart housing. For example, aluminum is a good electrical conductor that can provide good electrical ground and it can be easily machined and has well known metallurgical characteristics. Furthermore, aluminum is not highly reactive and non-magnetic which can be an essential requirement if the portable computing system has RF capabilities, such as WiFi, AM/FM, etc. In order to both protect the multipart housing and provide an aesthetically appealing finish (both visual and tactile), a protective layer can be placed or formed on an external surface of the multipart housing. The protective layer can be applied in such a way to both enhance the aesthetic appeal of the housing and to protect the appearance of the portable computing system. In one embodiment, when the multipart housing is formed of aluminum, at least an exterior surface of the aluminum can be anodized to form the protective layer.

The top case can include a cavity, or lumen, into which a plurality of operational components can be inserted during an assembly operation. In the described embodiment, the operational components can inserted into the lumen and attached to the top case in an "top-bottom" assembly operation in which top most components are inserted first followed by components in a top down arrangement. For example, the top case can be provided and shaped to accommodate a keyboard module. The keyboard module can include a keyboard assembly formed of a plurality of keycap assemblies and associated circuitry, such as a flexible membrane on which can be incorporated a switching matrix. In one embodiment, the keycap assemblies can take the form of low profile keycaps such as described in U.S. Patent Application Serial No. 12/712,102 entitled "STACKED METAL AND ELASTOMERIC DOME FOR KEY SWITCH" by Niu et al.

In one embodiment, a keycap assembly can be used to replace a power switch. For example, in a conventional keyboard each of a top row of keycaps can be assigned at least one function. However, by re-deploying one of the keycaps as a power button, the number of operational components can be reduced by at least eliminating the switch mechanism associated with the conventional power button and replacing it with the already available keycap assembly and associated circuitry.

In addition to the keyboard, the portable computing system can include a touch sensitive device along the lines of a touch pad, touch screen, etc. In those embodiments where the portable computing device includes a touch pad the touch pad can be formed from a glass material. The glass material provides a cosmetic surface and is the primary source of structural rigidity for the touchpad. The use of the glass material in this way significantly reduces the overall thickness of the touchpad compared to previous designs. The touchpad can include circuitry for processing signals from both a sensor associated with the touchpad and a keyboard membrane associated with the keyboard. Thus, separate circuitry previously used to process the signals from the keyboard membrane is eliminated.

The touchpad includes a dome switch for detecting an actuation of the touch pad that is covered with a sealing mechanism. The dome switch can include an electrical switch. The sealing mechanism can protect the electrical switch from dirt and moisture intrusion and hence, improve the robustness of the electrical switch. The sealing mechanism can include expansion gaps into which the dome switch can expand when it is compressed. During actuation, the use of the expansion gaps improves the force feedback response associated with the dome switch and the overall aesthetic feel of the touch pad.

In the embodiments where at least one of the top case and bottom case are formed of conductive material, such as aluminum, a good electrical ground plane or electrical ground can be provided. The ability to provide a good ground plane can be particularly advantageous due to the close proximity of the operational components to one another in the portable computing system. Due to this close proximity, it is desirable to isolate sources of significant RF radiation (such as a main logic board, or MLB) from those circuits, such as wireless circuits, that are sensitive to RF interference. In this way, at least the conductive top and/or bottom case be used to provide a good chassis ground that, in turn, can be used to electromagnetically isolate the circuits that produce RF energy from those components that are sensitive to RF energy. Moreover, by forming both top and bottom case with conductive material, the top and bottom case can be joined to form a base portion that can act as a Faraday cage that can effectively shield the external environment from EMI generated by the portable computing system. The Faraday cage like attributes of the base portion can also protect RF sensitive components from externally generated EMI.

In order to provide a pleasing aesthetic to the user, the shape of the portable computing system can have a profile that is pleasing to the eye and to the touch. In the described embodiments, the multipart housing can have a wedge shape. The wedge shape can be such that when the bottom surface of the portable computing system is placed upon a flat supporting surface, such as a table or desk, the angle presented by the wedge shaped housing (in particular the wedge shaped upper portion of the multipart housing) can present an easy to use keyboard arrangement and touchpad. In contrast to conventional portable computing systems such as laptop computers having a uniformly shaped housing with little or no angularity, the wedge shape of the portable computing system can improve user interaction with the touch pad and keyboard by presenting the touch pad surface and the keycaps in a more natural alignment with a user's fingers. In this way, improved ergonomics can help reduce an amount of stress and strain placed upon the user's wrists.

Due at least to the strong and resilient nature of the material used to form the multipart housing; the multipart housing can include a number of openings having wide spans that do not require additional support structures. Such openings can take the form of ports that can be used to provide access to internal circuits. The ports can include, for example, data ports suitable for accommodating cables (USB, Ethernet, FireWire, etc.) connecting external circuits. The openings can also provide access to an audio circuit, video display circuit, power input, etc.

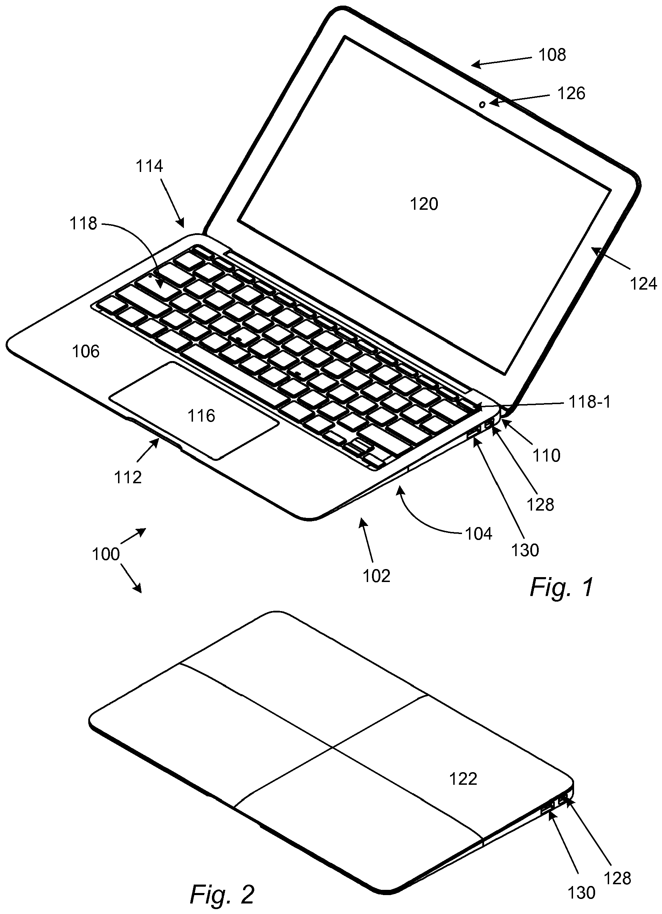

These and other embodiments are discussed below with reference to Figs. 1-16. However, those skilled in the art will readily appreciate that the detailed description given herein with respect to these figures is for explanatory purposes as the invention extends beyond these limited embodiments.

### Portable Computing Device

Figs. 1-6 show various views of portable computing system 100 in accordance with the described embodiments. Fig. 1 shows a front facing perspective view of portable computing system 100 in an open (lid) state whereas Fig. 2 shows portable computing system 100 in a close (lid) state. Portable computing system 100 can include base portion 102 formed of bottom case 104 fastened to top case 106. Base portion 102 can be pivotally connected to lid portion 108 by way of hollow clutch assembly 110 hidden from view by cosmetic wall 111. Base portion 102 can have an overall wedge shape having a first end sized to accommodate hollow clutch assembly 110. Base portion 102 can taper down to a more narrowly configured end arranged to accommodate inset portion 112 suitable for assisting a user in lifting lid portion 108 by, for example, a finger. In the described embodiment, the overall wedge shaped appearance of base portion 102 can be created by the overall wedge shape of top case 106. Top case 106 can be configured to accommodate various user input devices such as keyboard 114 and touchpad 116. Keyboard 114 can include a plurality of low profile keycap assemblies each having an associated key pad 118.

Each of the plurality of key pads 118 can have a symbol imprinted thereon for identifying the key input associated with the particular key pad. Keyboard 114 can be arranged to receive a discrete input at each keypad using a finger motion referred to as a keystroke. In the described embodiment, the symbols on each key pad can be laser etched thereby creating an extremely clean and durable imprint that will not fade under the constant application of keystrokes over the life of portable computing system 100. Touch pad 116 can be configured to receive a user's finger gesturing. A finger gesture can include touch events from more than one finger applied in unison. The gesture can also include a single finger touch event such as a swipe or a tap. In order to reduce component count, a keycap assembly can be re-provisioned as a power button. For example, key pad 118-1 can be used as power button 118-1. In this way, the overall number of components in portable computing system 100 can be commensurably reduced.

Lid portion 108 can include display 120 and rear cover 122 (shown more clearly in Fig. 2) that can add a cosmetic finish to lid portion 108 and also provide structural support to at least display 120. In the described embodiment, lid portion 108 can include bezel 124 that surrounds display 120. Lid portion 108 can be moved with the aid of hollow clutch assembly 110 from the closed position to remain in the open position and back again. Display 120 can display visual content such as a graphical user interface, still images such as photos as well as video media items such as movies. Display 120 can display images using any appropriate technology such as a liquid crystal display (LCD), OLED, etc. Portable computing system 100 can also include image capture device 126 located on bezel 124. Image capture device 126 can be configured to capture both still and video images. Display trim (or bezel) 124 can be supported by structural components (not shown) within lid portion 108 but attached to rear cover 122. Display trim 124 can enhance the overall appearance of display 120 by hiding operational and structural components as well as focusing attention onto the active area of display 120. Data ports 128 and 130 can be used to transfer data and/or power between an external circuit(s) and portable computing system 100. Lid portion 108 can be formed to have unibody construction that can provide additional strength and resiliency to lid portion 108 which is particularly important due to the stresses caused by repeated opening and closing. In addition to the increase in strength and resiliency, the unibody construction of lid portion 108 can reduce overall part count by eliminating separate support features

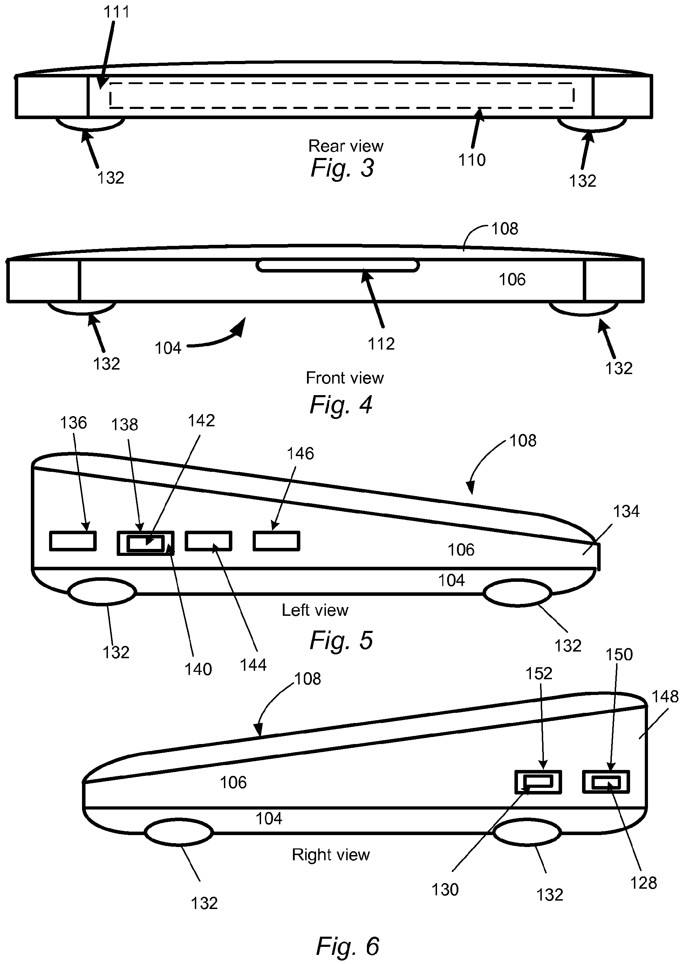

Turning now to Figs. 3-6 showing side views of portable computing system 100. More specifically, Fig. 3 shows a rear view of portable computing system 100 showing cosmetic feature 111 used to conceal hollow clutch assembly 110 and at least two support feet 132 that can be used to provide support to portable computing system 100. Support feet 132 can be formed of wear resistant and resilient material such as plastic. Fig. 4 shows representative front view of portable computing system 100 illustrating the relative position of insert 112 between top case 106 and lid portion 108. As shown in Fig. 5 illustrating a representative left side view of portable computing system 100 showing left side wall 134 of top case 106 having openings that can be used to accommodate various data and power ports. For example, opening 136 formed in left side wall 134 can be used to accommodate an Ethernet cable whereas opening 138 can be used to accommodate Magsafe™ receptacle 140. It should be noted that opening 138 must have a high aspect ratio in order to accommodate receptacle 140 due in part to a relatively large platform 142, or mesa that allows an appropriately configured power plug to more easily align to receptacle 140. In the particular embodiments described herein, audio receptacle 144 and side firing microphone 146 can be positioned on side wall 134. As shown in Fig. 6, right side wall 148 of top case 106 can include openings 150 and 152 used to accommodate data ports 128 (such as a USB data port) and 130 that can take the form of, respectively, a video port such a DisplayPort™ type video port.

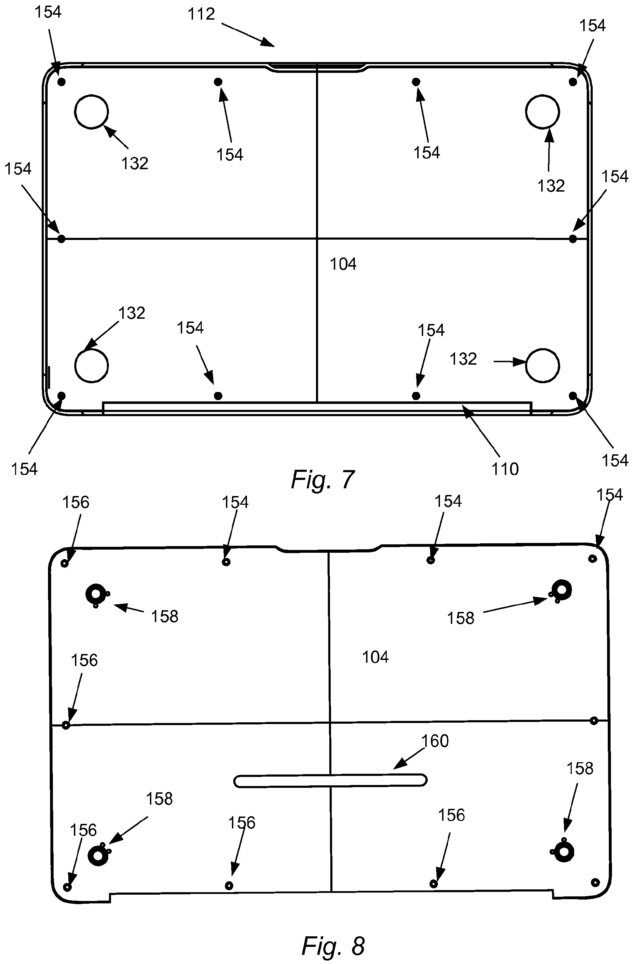

Fig. 7 shows an external view of bottom case 104 showing relative positioning of support feet 132, insert 112, exterior of hollow clutch assembly 110 and fasteners 154 used to secure bottom case 104 and top case 106 together. In the particular implementation described, fasteners 154 can take the form of tamper proof fasteners described in more detail below. Fig. 8 shows an internal view of bottom case 104 showing openings 156 used to accommodate fasteners 154. Moreover, fasteners 158 can be used to secure device feet 132 to bottom case 104. Standoff 160 can be used to provide support for bottom case 104 when attached to top case 106.

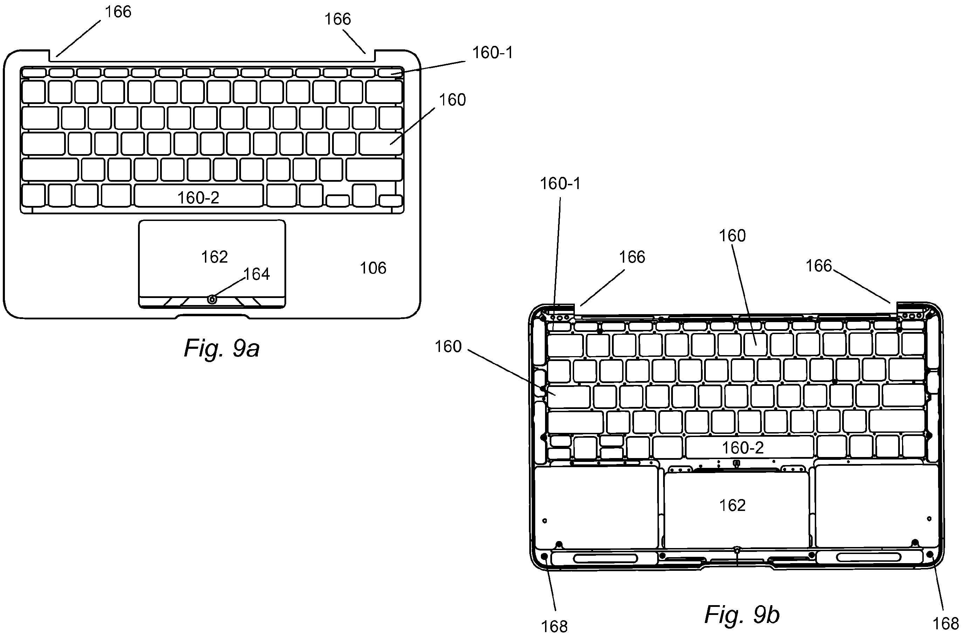

Figs. 9a and 9b show representative embodiments of top case 106. For example, Fig. 9a shows an exterior view of top case 106 illustrating various openings used to accommodate keyboard 114 and touch pad 116. More specifically, openings 160 can each have a size and shape in accordance with a specific key cap assembly. For example, opening 160-1 can be sized to accommodate power button 118-1 whereas opening 160-2 can be sized to accommodate a space bar. In addition to openings 160, opening 162 can provide support for touch pad 116. For example, opening 162 can include attachment feature 164 that can be used to secure the touchpad 116 to top case 106. Moreover, as seen in Fig. 9b showing the interior of top case 106, several additional attachment features can be seen that can be used to secure both touch pad 116 and keyboard 114. In a particular embodiment, keyboard114 and touch pad 116 can share circuitry that can at least reduce an overall component count. In addition, notch 166 can be used in conjunction with hollow clutch assembly 110 to provide a more unified and integrated appearance to portable computing system 100. Attachment features 168 can be used to with opening 156 to secure bottom case 104 and top case 106 using any suitable fastener.

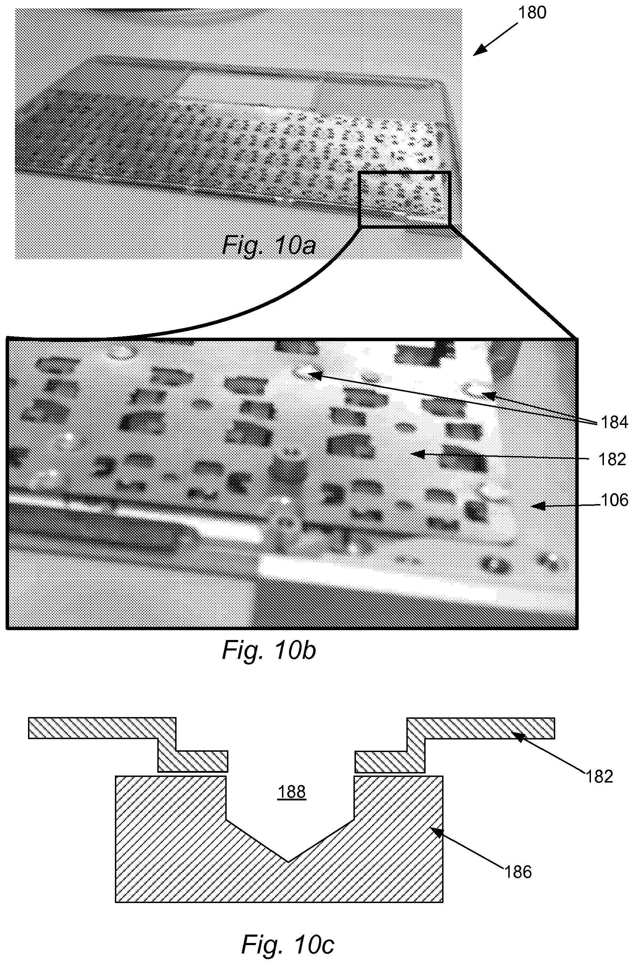

Figs. 10a through 10c show a top case and feature plate assembly 180. Fig. 10a shows the entire assembly 180 in obverse perspective view, while Fig. 10b is a close up view of a corner of the assembly. As shown in Fig. 10b, a feature plate 184 is fastened to top case 106 by way of numerous rivets 184. Numerous components can be disposed between the feature plate 184 and the top case 106, as will be readily appreciated. Fig. 10c depicts a partial cross section of one rivet location of feature plate assembly 180, which riveting is accomplished in a composite beam type manner. Feature plate 184, which can be a thin steel plate, for example, can be riveted at location 188 to an aluminum webbing 186 that is situated between various keycaps (not shown). Webbing 186 can in turn be coupled to top case 106, or can be integrally formed with the top case in some embodiments. Location 188 is preferably sized and shaped in order to accommodate a rivet that goes through a proximately placed location in feature plate 182.

Numerous advantages can be realized by way of having a feature plate 182 that is riveted to a top case 106 by way of multiple rivets 184 to enclose various internal components therein. For example, the combination of the top case 106 and a steel feature plate 182 can result in the creation of an effective EMI shield, and even a Faraday cage type shield in some embodiments. This EMI shielding effect is enhanced by the use of numerous fastening points held together by rivets, which tends to seal off the internal components of the keyboard better than when fewer fastening points are used, such as in a screw or bolt type arrangement. This EMI shield then effectively isolates the keyboard in an EMI sense from various other components in the computing device, such as the processor located directly below the keyboard or any antenna that may be at the device.

As another benefit, using a rivet rather than other types of fastening components, such as screws, bolts and the like results in no need for the fastening component to extend through the top case 106 or even the aluminum webbing 186 in order to affect a strong fastening of components. This is advantageous where a smooth and unbroken surface may be desired on the outside of the top case or aluminum webbing. This is also advantageous in that manufacturing riveting processes can be significantly faster than similar screwing or bolting processes, in that the obverse side of the components being riveted does not need to be accessed in some cases, such as that which is disclosed above. Another benefit that can be realized by using rivets instead of screws is that the overall assembly can be thinner, particularly since there is no longer a need to accommodate threaded structures or components, which can take up space.

While using rivets rather than screws or bolts tends to result in the need for a greater quantity of fastening components (i.e., rivets), since each rivet location tends to be weaker than each screw location in a similar assembly, this can be countered by using a composite beam type riveting arrangement for increased strength, and also a rapid riveting process to obtain the benefit of a smooth and unbroken obverse surface on one side of the assembly being riveted. The use of rivets rather than screws can lead to simpler manufacturing processes that tend to save costs, are faster, and can also result in the use of more fastening points, which in turn leads to greater integrity in components that are fastened together more reliably. The overall feel of a riveted together top case, keyboard and feature plate assembly is also improved by using rivets rather than screws, as the combination of components tends to be stiffer, more stable, and more affixed together as an overall assembly.

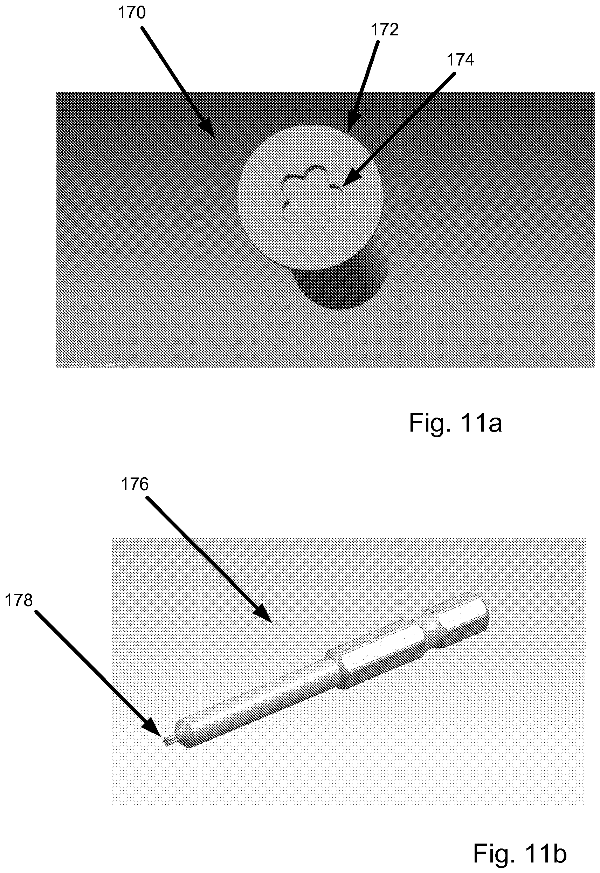

Fig. 11a shows an embodiment of fastener 154 in the form of tamper resistant fastener 170 that can be used to secure bottom case 104 and top case 106. In the described embodiments, tamper resistant fastener 170 can be formed to have head portion 172 that includes shaped recesses 174. The number and shape of recesses 174 can be widely varied. In this way, the only authorized mechanism by which tamper resistant fastener 170 can be engaged for insertion or removal is driver 176 shown in Fig. 11b. Driver 176 includes driver portion 178 shaped to correspond to shaped recesses 174. In the particular implementation shown in Figs. 11a and 11b, tamper resistant fastener 170 can include five shaped recesses 174 (also referred to as lobes) such that tamper resistant fastener 170 can be referred to as pentalobe fastener 170. Therefore, in order to properly engage pentalobe fastener 170, driver portion 178 of driver 176 must have a shape that conforms with that of pentalobes 174. In other words, driver portion 178 must be shaped and sized to coincide with the shape and size of pentalobes 174. Accordingly, only those individuals having access to authorized pentalobe driver 176 are capable of properly engaging pentalobe fastener 170. In this way, the use of an inappropriately shaped driver can be readily detected by way of the likely damage caused to pentalobe fastener 170.

### Reveal Region

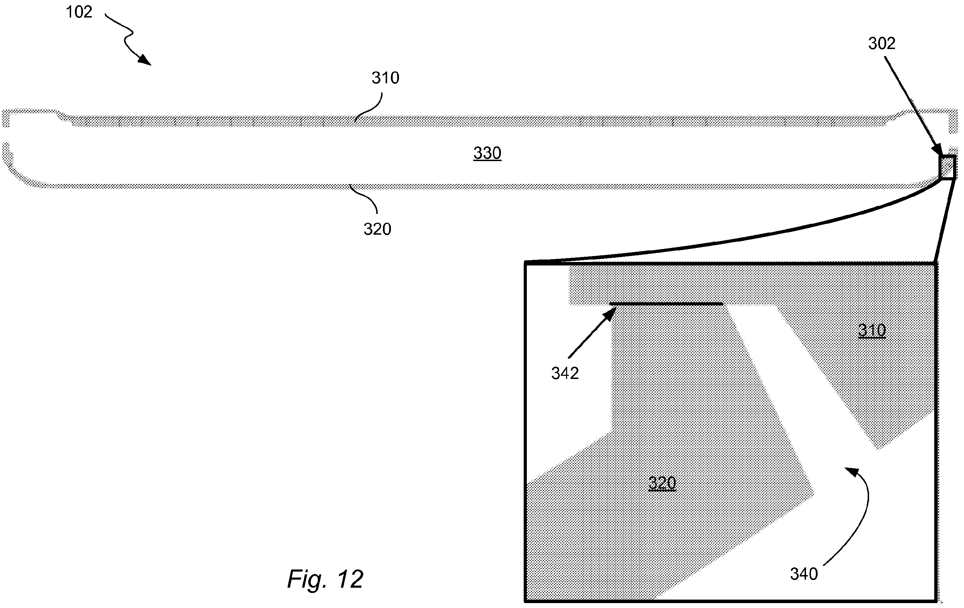

Turning next to Fig. 12, a non-claimed exemplary outer housing for a portion of a portable computing system is illustrated in side cross-sectional view. Base portion 102 can include a top housing component 310 and a bottom housing component 320 that are assembled together to form an internal cavity or region 330 that contains various internal computing components. The top and bottom housing components 310, 320 can contact each other around an outer circumference of the device at an interface or "reveal" region 302. The general form of the top and bottom housing components 310, 320 at such a reveal region 302 can be substantially similar all along the outer circumference where the top housing meets the bottom housing, although various customizations or anomalies can arise at certain points for certain features or reasons.

As shown in the close-up of reveal region 302, the top housing 310 abuts against the bottom housing 320 along contact area 342. Although it appears as just a line in FIG. 12, it will be readily appreciated that contact area 342 actually represents a region of surface area to surface area contact between the top and bottom housing components 310, 320. The actual location of contact area 342 can shift along the respective full surface of top component 310 and can vary from device to device, depending upon the actual dimensions of each individual component and device. A gap or "reveal" 340 can exist between the top housing component 310 and bottom housing component 320, with the size of this gap and the offset between the top and bottom housing components potentially varying from device to device or production run to production run in the mass manufacture of device components. As will be readily appreciated, the maximum and minimum dimensions of reveal 340 and any offset between the top and bottom housing components 310, 320 will depend upon various factors, particularly the dimensions and tolerances for the top and bottom housing components themselves.

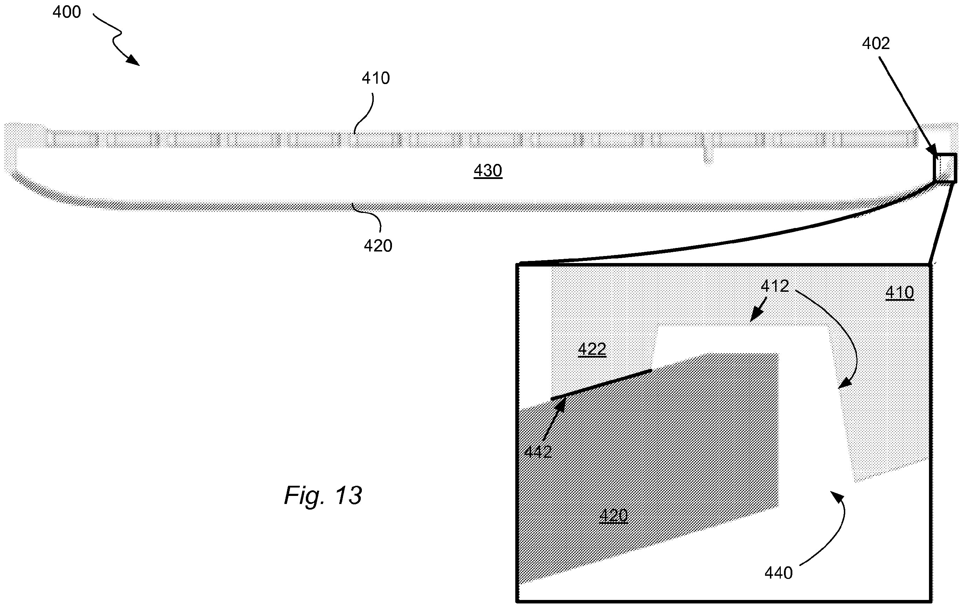

Continuing now with Fig. 13, an exemplary alternative outer housing for a portion of a portable computing system according to one embodiment of the present invention is similarly shown in side cross-sectional view. Portable computing system lower portion 400 can similarly include a top housing component 410 and a bottom housing component 420 that are assembled together to form an internal cavity or region 430 that contains various internal computing components. In general, lower portion 400 is part of a portable computing system or electronic device that can process data, and more particularly media data such as audio, video, images, and the like. By way of example, the respective portable computing system can generally correspond to a device that can perform as a music player, game player, video player, media center, laptop computer, tablet computer, handheld electronic device and/or the like. Internal cavity or region 430 can be configured to enclose any suitable number of internal components, such as, for example, integrated circuits that can take the form of chips, chip sets, or modules, any of which can be surface mounted to a printed circuit board or other support structure. Internal components can include a microprocessor, memory, battery, and various support circuits and so on.

The top and bottom housing components 410, 420 can contact each other around an outer circumference of the device at an interface or reveal region 402, the details of which are somewhat different than the reveal region 302 set forth above. As in the above reveal region 302, however, the general form of the top and bottom housing components 410, 420 at reveal region 342 can be substantially similar all along the outer circumference of the device where the top housing meets the bottom housing, although various customizations or anomalies can arise at certain points along the interface region for certain features or reasons.

As shown in the close-up of reveal region 402, top housing 410 similarly abuts against the bottom housing 420 along a contact area 442. Again, it will be readily appreciated that contact area 442 represents a region of surface area to surface area contact between the top and bottom housing components 410, 420, despite its representation in the cross-sectional illustration as just a line. Unlike the former and simpler interface region, contact area 442 generally defines a plane is at a non-zero angle with respect to a horizontal plane generally defined by the lower portion 400 or overall portable computing device.

In addition, the interfacing or contacting regions of top housing component 410 and bottom housing component 420 are a bit more complex, which results in a gap or reveal 440 that tends to be smaller and more consistent than the gap 340 in the foregoing version with respect to the mass production of portable computing systems. In particular, top housing component 410 has a trough 412 that is formed along its interfacing edge, with a shoulder 422 that rises along a back portion of the trough. As shown, the shoulder 422 has at its top surface an interfacing edge or first contact surface that contacts an upper surface or second contact surface of the bottom housing component 420 at contact area 442.

The design of both reveal regions 302, 402 generally allow for variances in the actual dimensions from component to component and device to device in a mass production or interchangeable parts setting without unduly compromising the aesthetic integrity and appeal of the overall product. The design of the trough 412 and shoulder 422 to bottom housing component interface 442 between the top and bottom housing components 410, 420 of reveal region 402 is superior, however, in that both the overall maximum size of and the variances in gap 440 and any resulting offset between housing components are reduced. That is, while some amount of gap or reveal 440 can generally be expected when different parts having varying dimension tolerances are assembled in a mass production environment, the trough 412 and shoulder 422 to bottom housing interfacing design disclosed herein reduces the overall size and variances in the gap without requiring any tightening in the dimensional tolerances of top and bottom housings 410, 420.

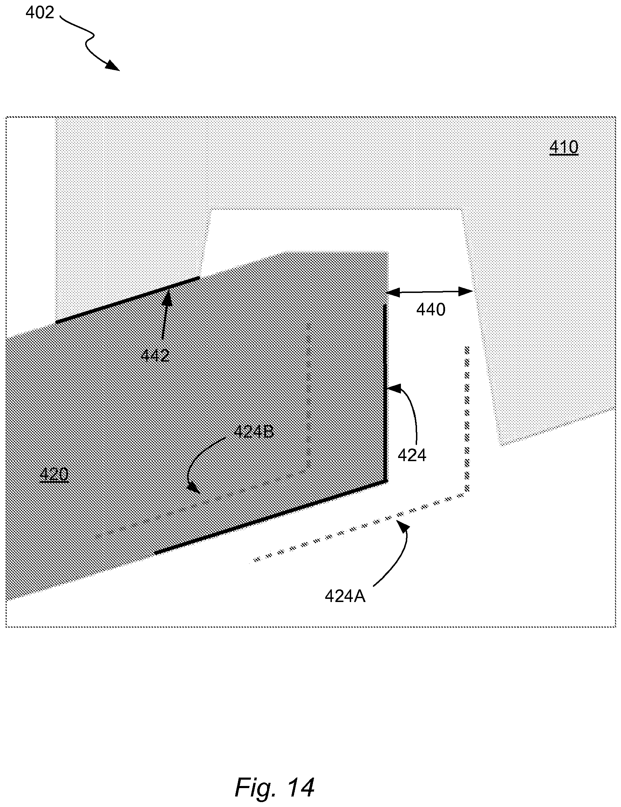

Fig. 14 illustrates in close-up side cross-sectional view an exemplary shoulder to trough interface region of the housing components of FIG. 13 according to one embodiment of the present invention. Again, reveal region 402 depicts a top housing component 410 having a trough and a shoulder, as well as a bottom housing component 420 having an upper surface that interfaces with the top surface of the shoulder. Actual contact between the top and bottom housing components 410, 420 is along contact area 442. As will be readily appreciated, the actual location of the leading/visible edge 424 of bottom housing 420 depends on the actual size and dimensions (e.g., length, height, thickness, etc.) of the top and bottom housing components 410, 420. In some part combinations, leading edge 424 will be located right in the middle of a tolerance spectrum resulting in gap or reveal 440.

Other part combinations with different parts may have slightly different dimensions that still remain within manufacturing tolerances. Such combinations that still include parts that are in tolerance could result in a leading edge placement that is advanced as far as leading edge profile 424A, or alternatively could result in a leading edge placement that is recessed as far as leading edge profile 424B. As will be understood, advanced leading edge profile 424A results in a smaller reveal 440 and an offset where the outer surface of bottom housing component 420 is raised above the surface of top housing component 410, while recessed leading edge profile 424B results in a greater reveal 440 and an offset where the outer surface of the bottom housing is sunk below the outer surface of the top housing. As will also be readily appreciated, varying one or more dimensions in the size of the top housing component or bottom housing component can result in a different portion of the upper contact surface of the bottom case contacting the contact surface of the shoulder along contact area 422.

Given the design of the trough and shoulder arrangement, however, the maximum, minimum and consistency values for the gap or reveal 440 and offset are improved without any change in the part or component tolerances. For example, while gap 340 might range from 0.07 to 0.63 inches in the earlier version, gap 440 would correspondingly be more consistent in its range from 0.11 to 0.62 inches. In addition, while the offset of reveal region 302 might range from -0.33 to +0.24 inches, the offset of reveal region 402 correspondingly only ranges from - 0.13 to +0.13 inches. Again, the reduction in the maximum and minimum gap and offset sizes results in a final product that is more consistent from device to device and between production runs, which results in improved aesthetic qualities and perceptions.

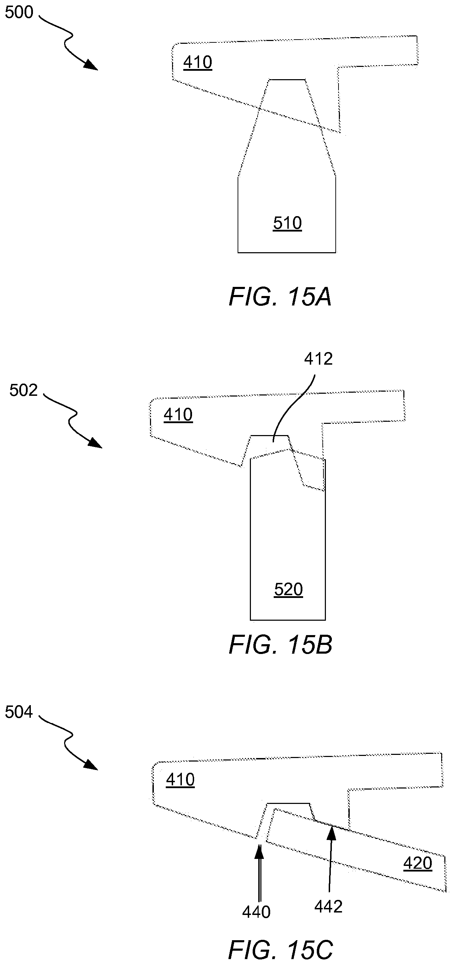

Moving next to Figs. 15A through 15C, on exemplary way of forming a trough and shoulder in a housing component interface region is provided according to one embodiment of the present invention. Beginning with Fig. 15A, an exemplary initial tooling arrangement designed to initiate the formation of a trough in a top housing component is shown in side cross-sectional view. Initial tooling arrangement 500 includes a partially formed top housing component 410 and a suitable cutting or shaping tool 510. Cutting tool 510 can be any of a number of tools, such as a saw, drill, router or the like. As shown, cutting tool 510 can be used to form a general trough or trough in a region of the top housing component 410.

After the initial trough is formed, Fig. 15B illustrates an exemplary secondary tooling arrangement designed to finish the trough and shoulder formation. Subsequent tooling formation 502 includes the top housing component 410 with the initially formed trough and a suitable secondary cutting or shaping tool 520. Secondary tool 520 can be used to shave, cut or otherwise remove an extended portion on the shoulder, such that a suitable interfacing surface is formed at the top surface of the shoulder. This interfacing surface is important, in that this is the surface that will eventually form the contact area 442 with the bottom housing component. Similar to the foregoing, secondary tool 520 can be any of a number of tools, such as a saw, drill, router, plane, blade or the like.

Lastly, Fig. 15C illustrates in side cross-sectional view the trough and shoulder of the top housing component of FIG. 15B as contacting the surface of a suitably formed bottom housing component. Formation 504 includes a top housing component 410 and a bottom housing component 420 having suitable interfacing regions. In particular, top housing 410 has finished trough and shoulder regions and is configured to contact bottom housing component 420 at contact area 442. As noted above, this results in a gap or reveals 440 that are smaller and more consistent in size from device to device.

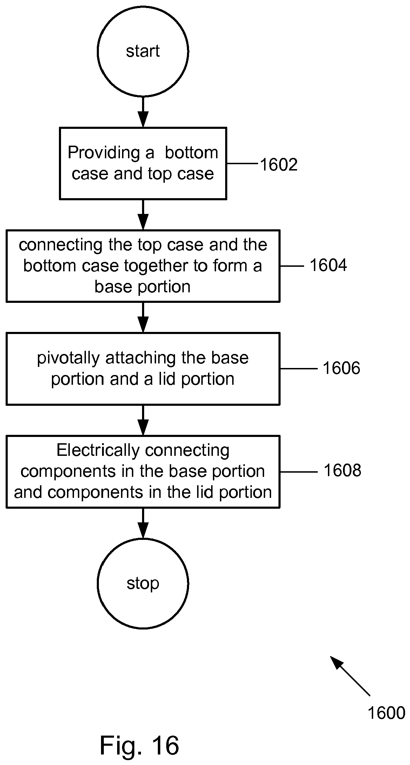

Fig. 16 shows a flowchart detailing a process in accordance with the described embodiments. Process 1600 can start at 1602 by providing a base portion that includes at least a wedge shaped top case having a trough formed at an interfacing edge thereof, wherein the trough includes a raised shoulder portion having a first contact surface, and a bottom case. At 1604, the bottom case is coupled to the top case to form a complete housing for at least a portion of the portable computing device for enclosing at least a plurality of operational components and a plurality of structural components. At 1606, the base portion is pivotally connected to a lid portion by a hinge assembly. In the described embodiments, the lid portion has at a plurality of components at least one of which is a display. At 1608, at least some of the components in the lid portion are electrically connected to operational components in the based portion by way of or more electrical conductors that run through the hinge assembly.

Although the foregoing invention has been described in detail by way of illustration and example for purposes of clarity and understanding, it will be recognized that the above described invention may be embodied in numerous other specific variations and embodiments without departing from the scope of the appended claims. Certain changes and modifications may be practiced, and it is understood that the invention is not to be limited by the foregoing details, but rather is to be defined by the scope of the appended claims.

## Claims

1. A laptop computer (100), comprising:
a base portion (102) formed from a lightweight material, and
a lid portion (108) pivotally connected to the base portion by a hinge assembly;
the base portion comprising a wedge shaped top housing component (106, 410) and a bottom housing component (104, 420) that are assembled together to form a complete housing for at least a portion of the laptop computer, the complete housing enclosing at least a plurality of operational components and a plurality of structural components, wherein the top and bottom housing components (410, 420) contact each other around an outer circumference of the base portion at an interface region (402), wherein:
the wedge shaped top housing component (106, 410) comprises:
a top surface having a first opening (160) configured to receive a portion of a keyboard (118) and a second opening (162) configured to receive a portion of a touchpad (116);
side walls formed around a circumference of the top housing component (106, 410) and defining a bottom opening in the top housing component (104, 410); and
a trough (412) in the side walls extending around the bottom opening and defined at least in part by:
a bottom surface;
an outer wall; and
an inner wall that is shorter than the outer wall and forms a shoulder having a first contact surface that contacts a second contact surface of the bottom housing component (104, 420) at an area of contact (442); and
the bottom housing component (104, 420) comprises a bottom surface defining a first plane and a peripheral portion extending around a circumference of the bottom surface at a non-zero angle with the first plane;
the second contact surface extends around a circumference of the peripheral portion of the bottom housing component (104, 420);
the area of contact (442) between the first and second contact surfaces defines a second plane that is non-parallel to the first plane; and
a leading edge (424) of the bottom housing component (104, 420) is spaced apart from both the outer wall and the bottom surface of the trough (412) by gaps (440); and
the lid portion having a display in communication with one or more of the plurality of operational components in said base portion, wherein one or more electrical conductors electrically connect the base portion to the lid portion.

2. The laptop computer (100) of any of the preceding claims, the hinge assembly comprising a hollow clutch assembly comprising at least a hollow cylindrical portion that includes an annular outer region, and a central bore region surrounded by the annular outer region, the central bore region suitably arranged to provide support for at least some of the electrical conductors passing between the display and electrical components disposed within the base portion.

3. A method of assembling a laptop computer (100) comprising:
providing a wedge shaped top housing component (106, 410) comprising:
a top surface having a first opening (160) configured to receive a portion of a keyboard and a second opening (162) configured to receive a portion of a touchpad (162);
side walls formed around a circumference of the top housing component (106, 410) and defining a bottom opening in the top housing component (106, 410); and
a trough (412) in the side walls extending around the bottom opening and defined at least in part by:
a bottom surface;
an outer wall; and
an inner wall that is shorter than the outer wall and forming a shoulder defining a first contact surface (442);
providing a bottom housing component (104, 420) comprising a bottom surface defining a first plane and a peripheral portion extending around a circumference of the bottom surface at a non-zero angle with the first plane, and a second contact surface that extends around a circumference of the peripheral portion of the bottom housing component (104, 420);
coupling the bottom housing component (104, 420) to the top housing component (106, 410) to form a complete housing for a base portion of the laptop computer, the base portion being adapted to enclose at least a plurality of operational components and a plurality of structural components, the coupling resulting in a leading edge (424) of the bottom housing component (104, 420) being spaced apart from both the outer wall and the bottom surface of the trough (412) by gaps (440), and the first contact surface of the top housing component (106, 410) contacts the second contact surface of the bottom housing component (104, 420) at an area of contact (442) defining a second plane non-parallel to the first plane; pivotally connecting the base portion to a lid portion (108) by a hinge assembly, wherein the lid portion has a plurality of components, at least one of which is a display; and
electrically connecting at least some of the components in the lid portion to operational components in the base portion by way of one or more electrical conductors that run through the hinge assembly.

4. The method as recited in claim 3, wherein providing a top housing component (106, 410) having a trough comprises forming the trough in the side walls extending around a circumference of the bottom opening of the top housing component (106, 410), with the outer wall and the inner wall rising above the bottom surface to form the trough; and
removing a portion of the inner wall to create the first contact surface.

5. The method as recited in claim 4, wherein coupling the bottom housing component (104, 420) to the top housing component (106, 410) comprises placing the second contact surface of the bottom housing component (104, 420) against the first contact surface of the raised portion.

## Patentansprüche

1. Laptopcomputer (100), umfassend:
Einen Basisabschnitt (102) gebildet aus einem Leichtmaterial, und
Einen Deckelabschnitt (108), der schwenkbar mit dem Basisabschnitt durch eine Scharnieranordnung verbunden ist;
Wobei der Basisabschnitt eine keilförmige obere Gehäusekomponente (106, 410) und eine untere Gehäusekomponente (104, 420) umfasst, die zusammengebaut sind um ein komplettes Gehäuse für mindestens einen Abschnitt des Laptopcomputers zu bilden, wobei das komplette Gehäuse mindestens eine Vielzahl von operationellen Komponenten und eine Vielzahl von strukturellen Komponenten umschließt, wobei die obere und die untere Gehäusekomponenten (410, 420) sich gegenseitig um einen Außenumfang des Basisabschnitts herum in einem Schnittstellenbereich (402) kontaktieren, wobei:
Die keilförmige obere Gehäusekomponente (106, 410) umfasst:
Eine obere Oberfläche aufweisend eine erste Öffnung (160), die konfiguriert ist, um einen Abschnitt einer Tastatur (118) zu empfangen, und eine zweite Öffnung (162), die eingerichtet ist, um einen Abschnitt eines Touchpads (116) zu empfangen;
Seitenwände die um einen Umfang der oberen Gehäusekomponente (106, 410) herum gebildet sind und die eine untere Öffnung in der oberen Gehäusekomponente (104, 410) definieren; und
Eine Mulde (412) in den Seitenwänden, die sich um die untere Öffnung herum erstreckt und die mindestens teilweise definiert ist durch:
Eine untere Oberfläche;
Eine äußere Wand; und
Eine innere Wand, die kürzer ist als die äußere Wand und eine Schulter, die eine erste Kontaktoberfläche aufweist, bildet, die eine zweite Kontaktoberfläche der unteren Gehäusekomponente (104, 420) in einem Kontaktbereich (442) kontaktiert; und
Die untere Gehäusekomponente (104, 420) umfasst eine untere Oberfläche, die eine erste Ebene und einen peripheren Abschnitt definiert, die sich um einen Umfang der unteren Oberfläche herum erstreckt, die in einem Winkeln unterschiedlich von Null zu der ersten Ebene steht;
Die zweite Kontaktoberfläche sich um einen Umfang des peripheren Abschnitts der unteren Gehäusekomponente (104, 420) herum erstreckt;
Der Kontaktbereich (442) zwischen der ersten und zweiten Kontaktoberfläche definiert eine zweite Ebene die nicht parallel zu der ersten Ebene ist; und
Ein Vorsprung (424) der unteren Gehäusekomponente (104, 420) ist von sowohl der äußeren Wand als auch der unteren Oberfläche der Mulde (412) durch Spalte (440) beabstandet; und
Der Deckelabschnitt aufweisend eine Anzeige in Kommunikation mit einer oder mehreren der Vielzahl von operationellen Komponenten in dem Basisabschnitt, wobei eine oder mehrere elektrische Leiter den Basisabschnitt mit dem Deckelabschnitt elektrisch verbinden.

2. Laptopcomputer (100) nach einem der vorhergehenden Ansprüche, wobei die Scharnieranordnung eine Hohlkupplungsanordnung, die mindestens einen hohlen zylindrischen Abschnitt umfasst, der einen ringförmigen äußeren Bereich beinhaltet, und einen zentralen Bohrungsbereich umfasst, der durch den ringförmigen äußeren Bereich umgeben ist, wobei der zentrale Bohrungsabereich angemessen angeordnet ist um Unterstützung für mindestens einige der elektrischen Leiter bereitzustellen, die zwischen der Anzeige und den elektrischen Komponenten verlaufen, die innerhalb des Basisabschnitts angeordnet sind.

3. Verfahren zum Zusammenbauen eines Laptopcomputers (100) umfassend:
Bereitstellen einer keilförmigen oberen Gehäusekomponente (106, 410) umfassend:
Eine obere Oberfläche aufweisend eine erste Öffnung (160), die konfiguriert ist, um einen Abschnitt einer Tastatur zu empfangen, und eine zweite Öffnung (162), die konfiguriert ist, um einen Abschnitt eines Touchpads (162) zu empfangen;
Seitenwände, die um einen Umfang der oberen Gehäusekomponente (106, 410) gebildet sind und die eine untere Öffnung in der oberen Gehäusekomponente (106, 410) definieren; und
Eine Mulde (412) in den Seitenwänden, die sich um die untere Öffnung herum erstreckt und mindestens teilweise definiert wird durch:
Eine untere Oberfläche;
Eine äußere Wand; und
Eine innere Wand die kürzer ist als die äußere Wand und eine Schulter bildet, die eine erste Kontaktoberfläche (442) definiert;
Bereitstellen einer unteren Gehäusekomponente (104, 420) umfassend eine untere Oberfläche, die eine erste Ebene definiert, und einen peripheren Abschnitt, der sich um einen Umfang der unteren Oberfläche herum erstreckt, die in einem Winkel unterschiedlich von Null zu der ersten Ebene steht, und eine zweite Kontaktoberfläche, die sich um einen Umfang des peripheren Abschnitts der unteren Gehäusekomponente (104, 420) herum erstreckt;
Koppeln der unteren Gehäusekomponente (104, 420) an die obere Gehäusekomponente (106, 410) um ein komplettes Gehäuse für einen Basisabschnitt des Laptopcomputers zu bilden, wobei der Basisabschnitt angepasst ist, um mindestens eine Vielzahl von operationellen Komponente und eine Vielzahl von strukturellen Komponenten zu umschließen, wobei die Kopplung in einem Vorsprung (424) der unteren Gehäusekomponente (104, 420) resultiert, der sowohl von der äußeren Wand als auch der unteren Oberfläche der Mulde (412) durch Spalte (440) beabstandet ist, und die erste Kontaktoberfläche der oberen Gehäusekomponente (106, 410) die zweite Kontaktoberfläche der unteren Gehäusekomponente (104, 420) in einem Kontaktbereich (442) kontaktiert, er eine zweite Ebene definiert, die nicht parallel zu der ersten Ebene ist;
Schwenkbares Verbinden des Basisabschnitts an dem Deckelabschnitt (108) durch eine Scharnieranordnung, wobei der Deckelabschnitt eine Vielzahl von Komponenten aufweist, von denen mindestens eine eine Anzeige ist; und
Elektrisches Verbinden von mindestens einigen der Komponenten in dem Deckelabschnitt mit operationellen Komponenten in dem Basisabschnitt durch eine oder mehrere elektrische Leiter, die durch die Scharnieranordnung verlaufen.

4. Verfahren nach Anspruch 3, wobei Bereitstellen einer oberen Gehäusekomponente (106, 410) aufweisend eine Mulde ein Bilden der Mulde in den Seitenwänden umfasst, die sich um einen Umfang der unteren Öffnung der oberen Gehäusekomponente (106, 410) herum erstrecken, wobei die äußere Wand und die innere Wand über die untere Oberfläche steigen um eine Mulde zu bilden; und
Entfernen eines Abschnitts der inneren Wand, um die erste Kontaktoberfläche zu erzeugen.

5. Verfahren nach Anspruch 4, wobei das Koppeln der unteren Gehäusekomponente (104, 420) mit der oberen Gehäusekomponente (106, 410) Platzieren der zweiten Kontaktoberfläche der unteren Gehäusekomponente (104, 420) gegen die erste Kontaktoberfläche des angehobenen Abschnitts umfasst.

## Revendications

1. Un ordinateur portable (100) comprenant :
une partie de base (102) formée à partir d'un matériau léger, et
une partie de couvercle (108) reliée à pivotement à la partie de base par un ensemble à charnière ;
la partie de base comprenant un composant de boitier supérieur cunéiforme (106, 410) et un composant de boitier inférieur (104, 420) qui sont assemblés ensemble pour former un boitier complet pour au moins une partie de l'ordinateur portable, le boitier complet enfermant au moins une pluralité de composants opérationnels et une pluralité de composants structurels, les composants de boitier supérieur et inférieur (410, 420) venant en contact l'un avec l'autre autour d'une circonférence externe de la partie de base au niveau d'une région d'interface (402), dans lequel :
le composant de boitier supérieur cunéiforme (106, 410) comprend :
une surface supérieure avec une première ouverture (160) configurée pour recevoir une partie d'un clavier (118) et
une seconde ouverture (162) configurée pour recevoir une partie d'un pavé tactile (116) ;
des parois latérales formées autour d'une circonférence du composant de boitier supérieur cunéiforme (106, 410) et définissant une ouverture inférieure dans le composant de boitier supérieur (104, 410) ; et
une gorge (412) dans les parois latérales, s'étendant autour de l'ouverture inférieure et définie au moins en partie par :
une surface inférieure ;
une paroi externe ; et
une paroi interne qui est plus courte que la paroi externe et qui forme un épaulement avec une première surface de contact qui vient en contact avec une seconde surface de contact du composant de boitier inférieur (104, 420) au niveau d'une zone de contact (442) ; et
le composant de boitier inférieur (104, 420) comprend une surface inférieure définissant un premier plan et une partie périphérique s'étendant autour d'une circonférence de la surface inférieure sous un angle non nul avec le premier plan ;
la seconde surface de contact s'étend autour d'une circonférence de la partie périphérique du composant de boitier inférieur (104, 420) ;
la zone de contact (442) entre la première et la seconde surface de contact définit un second plan qui n'est pas parallèle au premier plan ; et
un bord antérieur (424) du composant de boitier inférieur (104, 420) est espacé par des intervalles (440) à la fois de la paroi externe et de la surface inférieure de la gorge (412) ; et
la partie de couvercle possède un afficheur en communication avec un ou plusieurs composants de la pluralité de composants opérationnels dans ladite partie de base, un ou plusieurs conducteurs électriques connectant électriquement la partie de base à la partie de couvercle.

2. L'ordinateur portable (100) de la revendication précédente, dans lequel l'ensemble à charnière comprend un ensemble d'emboitement creux comprenant au moins une partie cylindrique creuse qui inclut une région externe annulaire, et une région centrale d'alésage entourée par la région externe annulaire, la région centrale d'alésage étant convenablement agencée pour constituer un support pour au moins certains des conducteurs électriques passant entre l'afficheur et des composants électriques disposés à l'intérieur de la partie de base.

3. Procédé d'assemblage d'un ordinateur portable (100), comprenant :
l'obtention d'un composant de boitier supérieur cunéiforme (106, 410) comprenant :
une surface supérieure avec une première ouverture (160) configurée pour recevoir une partie d'un clavier et une seconde ouverture (162) configurée pour recevoir une partie d'un pavé tactile (116) ;
des parois latérales formées autour d'une circonférence du composant de boitier supérieur cunéiforme (106, 410) et définissant une ouverture inférieure dans le composant de boitier supérieur (104, 410) ; et
une gorge (412) dans les parois latérales, s'étendant autour de l'ouverture inférieure et définie au moins en partie par :
une surface inférieure ;
une paroi externe ; et
une paroi interne qui est plus courte que la paroi externe et qui forme un épaulement définissant une première surface de contact (442) ;
l'obtention d'un composant de boitier inférieur (104, 420) comprenant une surface inférieure définissant un premier plan et une partie périphérique s'étendant autour d'une circonférence de la surface inférieure sous un angle non nul avec le premier plan, et une seconde surface de contact s'étendant autour d'une circonférence de la partie périphérique du composant de boitier inférieur (104, 420) ;
le couplage du composant de boitier inférieur (104, 420) au composant de boitier supérieur (106, 410) pour former un boitier complet pour une partie de base de l'ordinateur portable, la partie de base étant apte à enfermer au moins une pluralité de composants opérationnels et une pluralité de composants structurels, le couplage faisant en sorte qu'un bord antérieur (424) du composant de boitier inférieur (104, 420) soit espacé par des intervalles (440) à la fois de la paroi externe et de la surface inférieure de la gorge (412), et que la première surface de contact du composant de boitier supérieur (106, 410) vienne en contact avec la seconde surface de contact du composant de boitier inférieur (104, 420) au niveau d'une zone de contact (442) définissant un second plan non parallèle au premier plan ;
le montage à pivotement de la partie de base sur une partie de couvercle (108) par un ensemble à charnière, la partie de couvercle possédant une pluralité de composants dont au moins l'un est un afficheur ; et
la connexion électrique d'au moins certains des composants de la partie de couvercle à des composants opérationnels de la partie de base par le biais d'un ou plusieurs conducteurs électriques qui s'étendent au travers de l'ensemble à charnière.

4. Le procédé tel qu'énoncé dans la revendication 3, dans lequel l'obtention d'un composant de boitier supérieur (106, 410) possédant une gorge comprend
la formation de la gorge dans les parois latérales s'étendant autour d'une circonférence de l'ouverture inférieure du composant de boitier supérieur (106, 410), avec la paroi externe et la paroi interne qui sont surélevées par rapport à la surface inférieure pour former la gorge ; et
l'élimination d'une partie de la paroi interne pour créer la première surface de contact.

5. Le procédé tel qu'énoncé dans la revendication 4, dans lequel le couplage du composant de boitier inférieur (104, 420) au composant de boitier supérieur (106, 410) comprend le placement de la seconde surface de contact du composant de boitier inférieur (104, 420) contre la première surface de contact de la partie surélevée.
